# EUROPEAN PATENT SPECIFICATION

(11) **EP 2 246 834 B1**
(45) Date of publication and mention of the grant of the patent: **17.12.2014**
(21) Application number: 10172595.0
(22) Date of filing: 06.02.2008
(51) Int. Cl.: A01G 9/00, G09F 3/12

(54) **Label carrier**
Etikettenträger
Porte-étiquette

(30) Priority: 06.02.2007 NL 2000474
(43) Date of publication of application: 03.11.2010
(62) Divisional of application: 08705136.3
(73) Proprietor: Patentstar BV, 2771 NM Boskoop (NL)
(72) Inventor: Van der Starre, Huibert, 2742 KV Waddinxveen (NL)
(74) Representative: Feenstra, Louw

(56) References cited:
- DE-U1- 8 300 801
- FR-A- 2 830 113
- FR-A- 2 871 656
- FR-A1- 2 804 304
- NL-C1- 1 007 128
- US-A- 5 537 768
- US-A- 5 941 019

## Description

The present invention relates to an assembly comprising a label carrier and a label.

FR 2804304 discloses an assembly of this type and describes a construction in which a label is retained at the top by means of a U-shaped part and a pin. At the bottom, a U-shaped part is likewise provided, between which the label is clamped.

FR 2830113 also discloses an assembly of a label carrier and a label.

All kinds of plants and in particular plants placed in potted plants are provided with information-carrying labels. Often, such labels are attached to the plant or to sticks or other supports which are stuck into such pots and more particularly into the substrate present therein or attached thereto in any suitable manner. The labels are in this case often pushed onto a pin by means of an opening which is provided in the label. Such a pin preferably has a thickened end at its free end, as a result of which unintentional removal is no longer possible.

During growing of the plant, during transportation and during storage, the label as well as the plant are subjected to many kinds of movements. As a result thereof, the label may no longer be in the initial mounting position and may rotate around the pin. If the label comes into contact with the plant in any way, it will not move back into its initial position easily. In addition, it has been found that in environments where there is a wind (draught), labels end up in a wide variety of positions with respect to the holding pin.

It has been found that this reduces the commercial appeal of the product as its attractiveness is reduced.

NL 1 007 128 **discloses a label holding and securing element comprising a mushroom shaped thickening on a pin.**

It is an object of the present invention to provide an assembly by means of which the label is attached in a relatively stable manner without departing from the current simple methods of attachment.

This object is achieved with an above-described label carrier by means of the features of claim 1. According to the present invention, the label **is held on a label-holding and label-securing element** in an easy manner via the opening thereof in such a manner that it will not easily become detached.

According to the invention, it is proposed to provide, in addition to said holding and securing element, a further element which engages with the label. As a result of this engagement, rotation of the label about the label-holding and label-securing element is prevented in a simple manner. Depending on the requirements, this engagement may be more or less intense and may include frictional engagement. The distance between the two abovementioned elements is limited and is, more particularly, less than 2 cm. It will be understood that the opening in the label or other attachment means of the label on the label-holding and label-securing element has to be at a distance to the periphery of the label which is at least as great if the engagement element is to be effective. The label is provided with an opening for holding the label-holding element and has dimensions such that the label-engaging element does indeed engage with the label in the desired position. More particularly, the label is provided with an opening, the position of the opening being such that, in the desired position of the label with respect to the label carrier, the label-engaging element extends through this opening.

Here, in particular, the further element does not extend at all beyond the label in the direction of the plane of the label. Thus, it is possible for the label to be provided with an opening through which the further element can extend in a direction at right angles to the plane of the label.

According to a preferred embodiment, attaching the label is not impeded if a fitting resistance has to be overcome only at the label-holding and label-securing element. That is to say, that although the further element may be designed such that it prevents the label from moving away, this is preferably not the case.

According to a further embodiment of the invention, the label is provided with information on the rear, that is to say that side which is turned towards the support. According to a particular embodiment of the invention, this information may be provided upside down in the transport and display position as, according to the present invention, rotation of the label has to be prevented as much as possible.

By means of the present invention, it is possible to keep a number of labels of a number of plants placed on a shelf in exactly the same position. It has been found that this significantly increases the commercial appeal of the plants. The support may be any suitable construction, such as a separate clip, stick or the like.

The invention will be described below with reference to an exemplary embodiment illustrated in the drawing, in which:
fig. 1 shows an assembly of a plant pot and a support;
fig. 2 shows details of the support when the label is attached in side view;
fig. 3 shows the support from fig. 2 in rear view;
fig. 4 shows the support in side view when the label is being bent; and
fig. 5 shows a number of potted plants provided with the label carrier according to the invention.

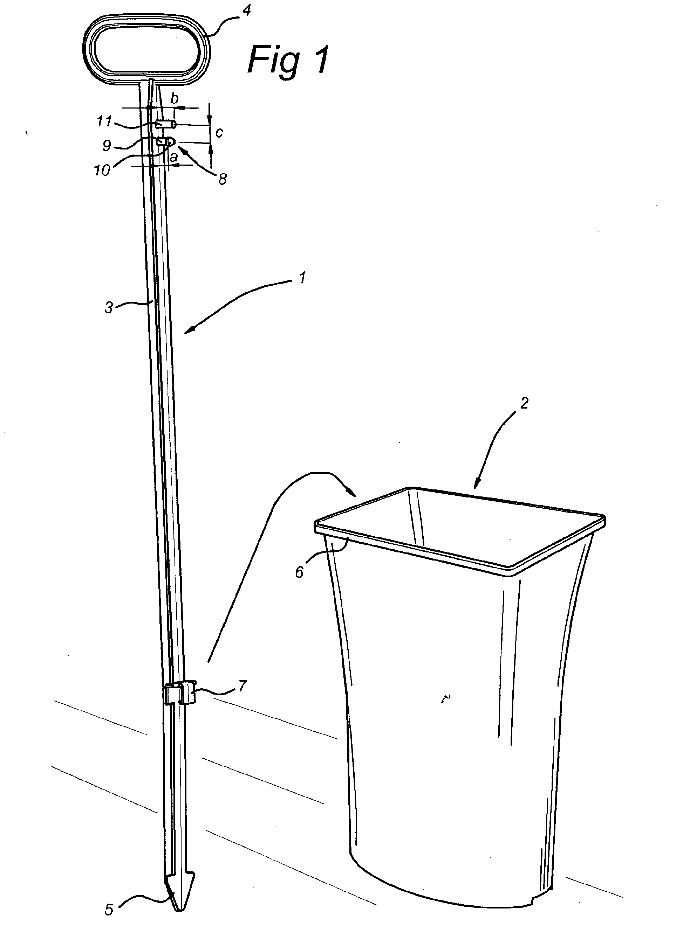

In fig. 1, a plant carrier is denoted overall by reference numeral 1. It is embodied in such a manner that it engages with a pot 2, into which pot 2 any suitable plant can be placed. The plant carrier comprises a stem or stick 3 having a handle 4 on one side and a tip 5 on the other side. The pot 2 is provided with an upper peripheral edge and the plant carrier is provided with a gripping lip which cooperates with the latter in order to thus enable the pot to be carried. See Netherlands patent 2,000,083 for further details about this construction.

It should be understood that the plant carrier 1 may be replaced by a simple stick which can be placed in a pot or any other conceivable label carrier.

Stem 3 is provided with a label-carrying pin 8 comprising, in this example, a cylindrical body 9 which has a thickening 10 at its end and a label-supporting pin 11 above the latter at a vertical distance c (in the position of use). The label-supporting pin 11 extends a distance b from the stem 3 while the length of the body 9 is a. It can be seen in fig. 1 that a < b.

It will be understood that the label-carrying pin and the label-supporting pin can also be provided on other parts of a plant placed in a pot. A pot could also be provided with said projecting pins.

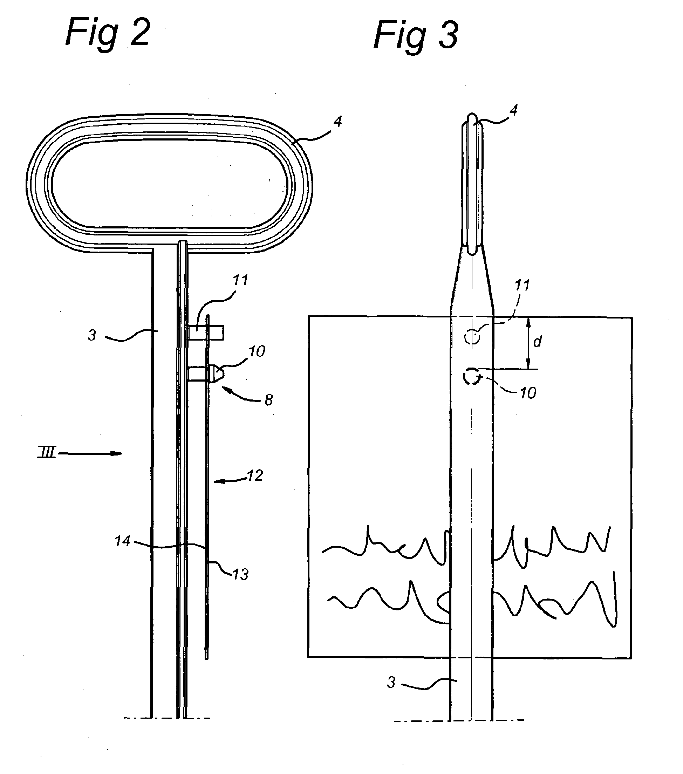

As can be seen in fig. 2, a label 12 can be pushed over the thickening 10 via the opening 15 in the customary manner.

The label is provided with two openings 15 and 16 which are one above the other. In this case, opening 15 is constructed in such a manner that it can move over thickening 10 in an optimum manner and in a manner which is known per se during fitting, but has dimensions which are smaller than those of thickening 10 in such a manner that it is not easily possible to move the label back. A second opening 16 is provided at a distance above opening 15 and is embodied in such a manner that it can receive label-supporting pin 11 in its correct position.

Due to the presence of the label-supporting pin which projects outwards slightly further, the label 12 will be attached to the plant carrier 1 in such a manner that it cannot rotate. In this case, the distance c has to be smaller than d, if d is the distance between opening 15 and the relevant outer periphery of the label with which the label-supporting pin 11 engages. By way of example, a value for c which is smaller than 2 cm is mentioned and the total height of the label is at least 5 cm. Depending on the length of label-supporting pin 11 relative to the length of body 9, the free end of the label-supporting pin 11 will extend to inside opening 6 or beyond it. It is possible, in the position shown in the figures, to realise opening 16 to be slightly elongate, so that the mutual positioning of the openings 15 and 16 with respect to label-supporting pin 10 and body 9 is less critical. The label has a front side 13 and a rear side 14. In fig. 3, the label has been fitted from the rear and it appears that, in the normal position, the information present thereon is displayed in such a way that it can be read normally. It is also possible to display the information upside down.

It appears that this information has been fitted upside down. This has been done because the user will, in the position of use, tend to bend the label in order to read the relevant information. In order to prevent the label from being damaged by the user, the information is fitted upside down. Consequently, the user will tend to hold the label in the correct position and move it back after reading the information.

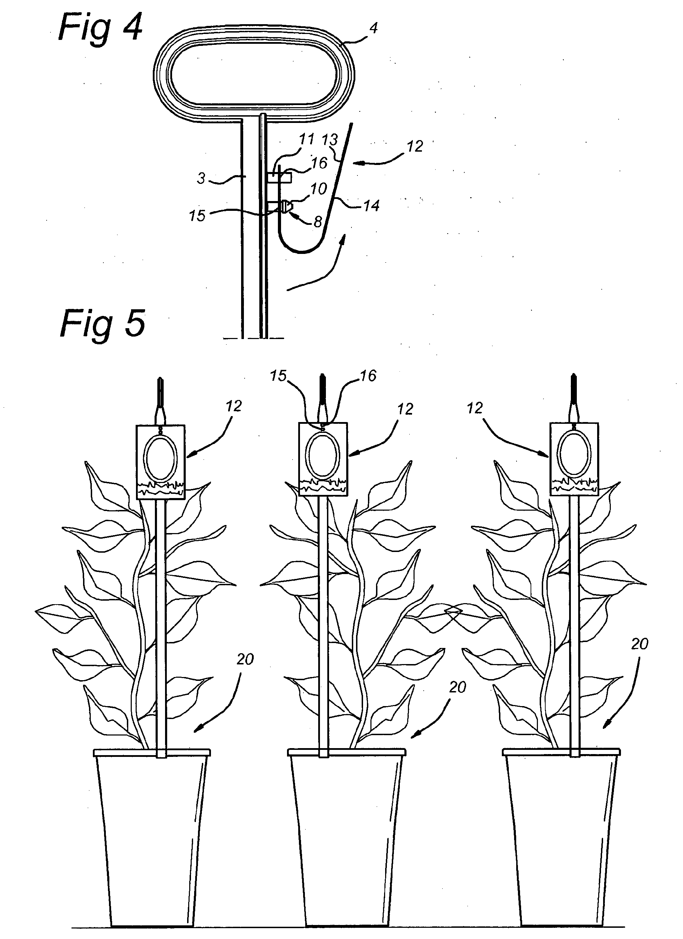

In this manner, the arrangement illustrated in fig. 5 can be obtained. That is to say, an arrangement in which a number of potted plants, each denoted by reference numeral 20, is in each case provided with a label, all of which are in virtually the same position. Wind, transportation or any other kind of displacement do not affect the positioning of the label with respect to the stem 3. As a result, a neat and orderly line-up is achieved, which makes it easier to read the information.

Upon reading the above, those skilled in the art will immediately be able to think of numerous modifications as labels are attached to stems and other parts of (potted) plants in a wide variety of ways. However, labels are also attached in a wide variety of ways to shrubs and the like. With all these applications, it is possible to provide the attachment means for the label with an additional part which acts as a label-engaging element and can prevent simple rotation due to the wind, the plant being moved and the like in a simple manner. All such variants are deemed to be within the scope of the attached claims.

## Claims

1. Assembly comprising a label (12), having an opening (15) and a further opening (16), and a label carrier (1), said label carrier comprising a support (3) provided with an element (8) extending from said support and holding and securing the label (12) at said opening (15), a label-engaging element (11) which extends from said support being provided, wherein at a distance (c) from said label-securing element (8) said label-engaging element (11) is provided, with said distance (c) being smaller than the distance (d) of said opening (15) to the periphery of said label, **characterized in that**, said label holding and securing element (8) comprises a cylindrical body (9) which has a thickening (10) at its end, wherein said opening (15) is constructed in such a manner that it can move over the thickening (10) during fitting, but has dimensions which are smaller than those of the thickening (10) in such a manner that it is not easily possible to move said label back and **in that** said label-engaging element (11) comprises a label-supporting pin extending through said further opening (16), **wherein the length (a) of the cylindrical body (9) is smaller than the length (b) of the label supporting pin.**

2. Assembly according to claim 1, wherein said label holding and securing element (8) comprises a mushroom-shaped head (10).

3. Assembly as claimed in one of the preceding claims, wherein the distance (c) between said elements (8, 11) is smaller than 2 cm.

4. Assembly as claimed in one of the preceding claims, comprising a stick (3).

5. Assembly as claimed in claim 4, wherein said stick (3) is a (potted) plant carrier.

6. Assembly as claimed in one of the preceding claims, wherein, in the position of use, the label-holding element (8) is situated below said label-engaging element (11).

7. Assembly as claimed in one of the preceding claims, wherein said label (12) comprises a further opening (16) for receiving said label-engaging element (11).

8. Assembly as claimed in claim 7, wherein said further opening (16) is elongated in the direction towards said opening (15).

9. Assembly as claimed in claim 4 or any claim depending on claim 4, wherein said label (12), on that side (14) which is turned towards the stick (3), comprises information, which information is displayed upside down in the transport position.

## Patentansprüche

1. Einrichtung mit einem Etikett (12), das eine Öffnung (15) und eine zusätzliche Öffnung (16) hat, einem Etikett-Träger (1), wobei der Etikett-Träger aufweist eine Stütze (3), die mit einem Element (8) versehen ist, das sich von der Stütze aus erstreckt und das Etikett (12) an der Öffnung (15) hält und sichert, einem Etikett-Eingriffselement (11), welches sich von der bereitgestellten Stütze aus erstreckt, wobei eine Distanz (c) von dem Etikett-Sicherungselement (8) zu dem Etikett-Eingriffselement (11) vorgesehen ist, wobei diese Distanz (c) kleiner ist als die Distanz (d) der Öffnung (15) zu der Peripherie des Etiketts, **dadurch gekennzeichnet, dass** das Etikett-Halte-und-Sicherungselement (8) einen zylindrischen Körper (9) aufweist, der eine Verdickung (10) an seinem Ende hat, wobei die Öffnung (15) in einer solchen Weise konstruiert ist, dass sie sich beim Einbauen über die Verdickung (10) bewegen kann, wobei sie aber Abmessungen hat, die kleiner sind als jene der Verdickung (10) in einer solchen Weise, dass es nicht einfach möglich ist, das Etikett zurückzubewegen, und dass das Etikett-Eingriffselement (11) einen Etikett-Stützzapfen aufweist, der sich durch die zusätzliche Öffnung (16) erstreckt, wobei die Länge (a) des zylindrischen Körpers (9) kleiner ist als die Länge (b) des Etikett-Stützzapfens.

2. Einrichtung gemäß Anspruch 1, wobei das Etikett-Halte-und-Sicherungselement (8) einen Pilz-förmigen Kopf aufweist (10).

3. Einrichtung gemäß einem der vorhergehenden Ansprüche, wobei die Distanz (c) zwischen den Elementen (8, 11) kleiner als 2cm ist.

4. Einrichtung gemäß einem der vorhergehenden Ansprüche, aufweisend einen Stab (3).

5. Einrichtung gemäß Anspruch 4, wobei der Stab (3) ein (eingetopfter) Pflanzenträger ist.

6. Einrichtung gemäß einem der vorhergehenden Ansprüche, wobei, in der Verwendungsposition, das Etikett-Haltelement (8) unter dem Etikett-Eingriffselement (11) angeordnet ist.

7. Einrichtung gemäß einem der vorhergehenden Ansprüche, wobei das Etikett (12) eine zusätzliche Öffnung (16) zum Aufnehmen des Etikett-Eingriffselements (11) aufweist.

8. Einrichtung gemäß Anspruch 7, wobei die zusätzliche Öffnung (16) in der Richtung zu der Öffnung (15) langgestreckt ist.

9. Einrichtung gemäß Anspruch 4 oder irgendeinem von Anspruch 4 abhängigen Anspruch, wobei das Etikett (12), auf jener Seite (14), die dem Stab (3) zugewandt ist, Informationen aufweist, welches Informationen in der Transportposition umgedreht angezeigt sind.

## Revendications

1. Ensemble comprenant une étiquette (12), comportant une ouverture (15) et une ouverture supplémentaire (16), et un porte-étiquette (1), ledit porte-étiquette comprenant un support (3) pourvu d'un élément (8) s'étendant à partir dudit support et retenant et fixant l'étiquette (12) au niveau de ladite ouverture (15), un élément d'entrée en prise avec étiquette (11) qui s'étend à partir dudit support étant prévu, dans lequel, à une distance (c) dudit élément de fixation d'étiquette (8), ledit élément d'entrée en prise avec étiquette (11) est prévu, ladite distance (c) étant inférieure à la distance (d) de ladite ouverture (15) jusqu'à la périphérie de ladite étiquette, **caractérisé en ce que** ledit élément de retenue et de fixation d'étiquette (8) comprend un corps cylindrique (9) qui comporte un épaississement (10) à son extrémité, dans lequel ladite ouverture (15) est construite de manière telle qu'elle puisse se déplacer sur l'épaississement (10) durant l'ajustement, mais possède des dimensions qui sont inférieures à celles de l'épaississement (10) de manière telle qu'il ne soit pas facilement possible de redéplacer ladite étiquette, et **en ce que** ledit élément d'entrée en prise avec étiquette (11) comprend une tige de support d'étiquette s'étendant à travers ladite ouverture supplémentaire (16), dans lequel la longueur (a) du corps cylindrique (9) est inférieure à la longueur (b) de la tige de support d'étiquette.

2. Ensemble selon la revendication 1, dans lequel ledit élément de retenue et de fixation d'étiquette (8) comprend une tête en forme de champignon (10).

3. Ensemble selon une des revendications précédentes, dans lequel la distance (c) entre lesdits éléments (8, 11) est inférieure à 2 cm.

4. Ensemble selon une des revendications précédentes, comprenant un bâton (3).

5. Ensemble selon la revendication 4, dans lequel ledit bâton (3) est un porte-plante (en pot).

6. Ensemble selon une des revendications précédentes, dans lequel, dans la position d'utilisation, l'élément de retenue d'étiquette (8) est situé sous ledit élément d'entrée en prise avec étiquette (11).

7. Ensemble selon une des revendications précédentes, dans lequel ladite étiquette (12) comprend une ouverture supplémentaire (16) pour recevoir ledit élément d'entrée en prise avec étiquette (11).

8. Ensemble selon la revendication 7, dans lequel ladite ouverture supplémentaire (16) est allongée dans la direction vers ladite ouverture (15).

9. Ensemble selon la revendication 4 ou une quelconque revendication dépendant de la revendication 4, dans lequel ladite étiquette (12), sur le côté (14) qui est tourné vers le bâton (3), comprend des informations, lesquelles informations sont affichées à l'envers dans la position de transport.
